# FASCICULE DE BREVET EUROPEEN

(11) **EP 1 807 641 B1**
(45) Date de publication et mention de la délivrance du brevet: **11.08.2010**
(21) Numéro de dépôt: 05815653.0
(22) Date de dépôt: 21.10.2005
(51) Int. Cl.: F16H 61/21, F16H 61/02

(54) **PROCEDE DE COMMANDE D'UNE TRANSMISSION AUTOMATIQUE DE VEHICULE AUTOMOBILE EN PHASE DE FREINAGE**
VERFAHREN ZUR STEUERUNG EINES AUTOMATIKGETRIEBES EINES KRAFTFAHRZEUGS IN DER BREMSPHASE
METHOD FOR CONTROLLING AN AUTOMATIC GEARBOX PERTAINING TO A MOTOR VEHICLE IN THE BRAKING PHASE

(30) Priorité: 29.10.2004 FR 0411569
(43) Date de publication de la demande: 18.07.2007
(73) Titulaire: RENAULT S.A.S., 92100 Boulogne Billancourt (FR)
(72) Inventeur: POISSON, Carine, F-93160 NOISY LE GRAND (FR); BRUN, Eric, F-92260 FONTENAY AUX ROSES (FR)
(74) Mandataire: Rougemont, Bernard
(86) Numéro de dépôt international: PCT/FR2005/050880
(87) Numéro de publication internationale: WO 2006/048566

(56) Documents cités:
- EP-A- 0 512 705
- EP-A- 0 559 255
- FR-A- 2 765 652
- US-A- 5 555 170

## Description

La présente invention se rapporte a un procédé de commande d'une transmission automatique de véhicule automobile en phase de freinage.

Dans la plupart des procédés connus de commande de transmissions automatiques à rapport continûment variable (CVT ou « Continuous Variable Transmission ») ou discrets (BVA ou « Boîtes de Vitesses Automatiques » ou BVR « Boîtes de Vitesses Robotisées »), les changements de rapports de transmission sont décidés en fonction de la vitesse du véhicule et de la charge du moteur.

Le plus souvent, ces décisions sont prises au moyen de lois préétablies : variogrammes pour les transmissions automatiques à rapport continûment variable, et lois de changements de rapports pour les transmissions automatiques à rapports discrets.

Ces procédés connus de commande des transmissions automatiques présentent des inconvénients lors des phases de freinage, où une rétrogradation de rapport de transmission est nécessaire (principe du « frein moteur » ; on précise ici que par « rétrogradation de rapport de transmission », on désigne la diminution de rapport de vitesse, continu ou discret).

En effet, quelles que soient les conditions de roulage (descente, plat, montée) et quel que soit le style de conduite du conducteur, les rétrogradations auront lieu aux mêmes points de fonctionnement dans le plan athématique vitesse du véhicule/charge du moteur, ce qui est préjudiciable tant du point de vue du confort de conduite que de la sécurité.

FR 2 765 652 divulgue un procédé selon le préambule de la revendication 1 visant à supprimer cet inconvénient.

Le procédé enseigné par ce document permet de commander une transmission automatique de véhicule automobile en phase de freinage, et il comprend les étapes consistant à :
- déterminer une valeur de rapport de transmission à partir de lois préétablies, et à
- déterminer, à partir de cette valeur et de paramètres représentatifs de la situation dudit véhicule, une valeur de rapport de transmission corrigée apte à provoquer une rétrogradation anticipée de ladite transmission automatique.

Bien qu'il permette de bénéficier d'une meilleure assistance du frein moteur pendant les phases de freinage, ce procédé de la technique antérieure n'est pas tout à fait satisfaisant.

En effet, il utilise notamment comme paramètre la valeur actuelle du régime de la turbine de la boîte de vitesses automatique, et compare cette valeur actuelle à une valeur limite qui ne dépend pas du rapport de vitesse sur lequel on se trouve.

Il en résulte que les consignes de rétrogradation ne sont pas homogènes suivant les rapports, ce qui nuit à l'agrément de conduite.

En effet, étant donné l'étagement non régulier d'une boîte de vitesse (écart plus important entre certains rapports), le frein moteur ne sera pas le même sur des rétrogradations différentes (3→2 ou 5→4 par exemple) même si elles s'effectuent au même régime de départ.

La présente invention a pour but d'améliorer ce procédé de la technique antérieure.

On atteint ce but de l'invention avec un procédé de commande d'une transmission automatique de véhicule automobile en phase de freinage, du type dans lequel :
- on détermine une valeur de rapport (ou de régime) de transmission demandé à partir de lois préétablies,
- on détermine, à partir de cette valeur et de paramètres représentatifs de la situation dudit véhicule, une valeur de rapport (ou de régime) de transmission corrigée apte à provoquer une rétrogradation anticipée de ladite transmission automatique,
remarquable en ce qu'on détermine ladite valeur corrigée à partir d'une estimation du régime primaire souhaité pour ladite transmission automatique.

Grâce à ce procédé, on peut adapter le déroulement de la rétrogradation à un objectif de régime primaire qui, compte tenu de la situation du véhicule, semble offrir le maximum de confort de conduite et de sécurité.

De plus, le procédé selon l'invention peut être appliqué tant à une transmission automatique à rapports discrets qu'à une transmission automatique à rapport continûment variable.

Suivant d'autres caractéristiques optionnelles du procédé selon l'invention :
- on réalise ladite estimation à partir de paramètres choisis dans le groupe comprenant (liste non exhaustive) :
   - une information représentative du temps de freinage,
   - la décélération du véhicule,
   - le régime primaire,
   - le régime primaire calculé sur les rapports inférieurs (valable uniquement dans le cas d'une transmission automatique à rapports discrets),
   - la pente de la route,
   - un indicateur représentatif du style de conduite,
   - la masse du véhicule,
   - l'adhérence,
   - l'accélération transversale,
   - la température de la boîte,
   - la température de l'eau moteur,
- on réalise ladite estimation en appliquant des règles choisies dans le groupe comprenant les règles suivantes (liste non exhaustive) :
   - plus le conducteur freine fort, plus on rétrograde à des régimes élevés,
   - plus on se trouve en descente, plus on rétrograde tôt,
   - plus le conducteur est sportif, plus on rétrograde à des régimes élevés,
   - plus le véhicule est chargé en descente, plus on rétrograde tôt,
   - si l'adhérence est faible et si on est en virage, on ne rétrograde pas,
   - si on freine légèrement et si l'adhérence est faible, on rétrograde à des régimes faibles,
   - si on freine fort et si l'adhérence est faible, on ne rétrograde pas,
- on adapte les seuils desdites règles à la situation dudit véhicule.

La présente invention se rapporte également à l'application d'un procédé conforme à ce qui précède à une transmission à rapport continûment variable.

De manière optionnelle, dans cette application, à l'issue de la phase de freinage, on applique la stratégie suivante :
- lorsqu'on appuie sur l'accélérateur, on fait converger la valeur de régime de consigne appliquée à ladite transmission automatique vers ladite valeur de régime demandé par les lois,
- si, pendant ladite convergence, on se retrouve dans une situation où il convient de rétrograder, on redonne ladite valeur de régime corrigée à ladite valeur de régime de consigne,
- si, pendant ladite convergence, on relève le pied de l'accélérateur, alors on fige ladite valeur de régime de consigne à sa dernière valeur.

La présente invention se rapporte également à une application d'un procédé conforme à ce qui précède à une transmission à rapports discrets.

Suivant des caractéristiques optionnelles de cette application :
- on attend que ladite valeur corrigée ait subi une diminution correspondant au moins à une double rétrogradation pour autoriser effectivement cette double rétrogradation, dans la limite d'une temporisation maximum,
- on adapte ladite attente à des paramètres choisis dans le groupe comprenant la valeur actuelle du rapport de transmission, le jeu de lois de changement de vitesses sélectionné et la décélération du véhicule,
- à l'issue de la phase de freinage, on applique la stratégie suivante :
   - au début de la rétrogradation, on initialise une temporisation,
   - lorsqu'on appuie sur l'accélérateur, on lance la temporisation,
   - si, pendant que ladite temporisation s'écoule, on relève le pied de l'accélérateur, alors on fige la valeur de rapport de consigne appliquée à ladite transmission automatique à sa dernière valeur,
   - dès que la temporisation est écoulée et qu'on n'est pas en virage, on donne ladite valeur de rapport demandé à ladite valeur de rapport de consigne,
   - si on est en virage, la valeur de rapport de consigne est figée jusqu'à la sortie du virage.

La présente invention se rapporte également à une transmission automatique de véhicule automobile, remarquable en ce qu'elle est adaptée pour mettre en oeuvre un procédé conforme à ce qui précède.

La présente invention se rapporte également à un véhicule automobile selon la revendication 12 remarquable en ce qu'il incorpore une transmission automatique conforme à la revendication 11.

D'autres caractéristiques et avantages de l'invention apparaîtront à la lecture de la description qui va suivre et à l'examen des figures annexées, dans lesquelles :
- la figure 1 représente de manière schématique les principales étapes du procédé selon l'invention,
- la figure 2 représente la décélération d'un véhicule en phase de freinage,
- la figure 3A représente les rétrogradations de rapports de vitesses de ce véhicule dans l'hypothèse d'une transmission automatique à rapports discrets,
- la figure 3B représente l'estimation du régime primaire à atteindre, permettant de commander les rétrogradations représentées sur la figure 3A, et
- la figure 4 représente, sur le même graphique, les variations de régime d'une transmission automatique à rapport continûment variable et l'estimation du régime primaire à atteindre.

Dans ce qui suit, on utilisera l'expression « transmission automatique ».

Il faut entendre que, sauf indication contraire, cette expression couvre à la fois le cas d'une transmission automatique à rapports discrets et le cas d'une transmission à rapport continûment variable.

On utilisera également l'expression « régime primaire ». Cette expression désigne le régime de l'arbre primaire, ou régime d'entrée, de la transmission automatique.

On parlera de « situation » du véhicule. Ce terme se rapporte tant à l'état interne du véhicule (régime primaire, masse du véhicule, accélération transversale, température de la transmission automatique, température de l'eau moteur ...) qu'à son environnement (pente de la route, adhérence, ...) et au style de conduite de ce véhicule.

La lettre « R », qui sera utilisée avec ou sans indice, signifiera « rapport » dans le cas d'une transmission automatique à rapports discrets, et « régime » dans le cas d'une transmission automatique à rapport continûment variable.

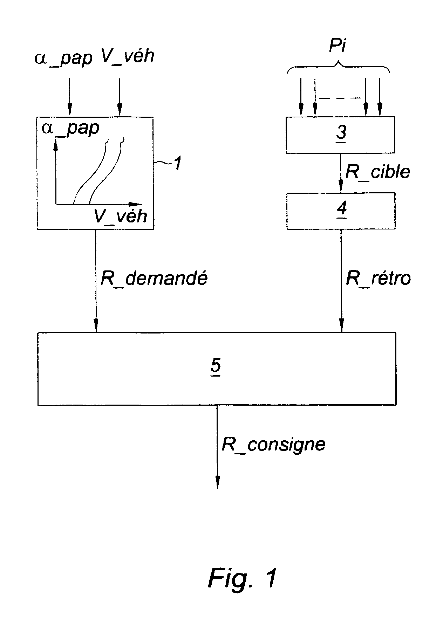

On se reporte à présent à la figure 1, sur laquelle on voit qu'à partir d'une ou plusieurs lois préétablies 1 on détermine classiquement une valeur R_demandé de rapport (cas d'une transmission à rapports discrets) ou de régime (cas d'une transmission à rapport continûment variable) demandé de la transmission automatique.

Comme cela est connu en soi, la valeur R_demandé est déterminée notamment à partir d'un paramètre α_pap représentatif de la charge du moteur du véhicule, et d'un paramètre V_véh représentatif de la vitesse de ce véhicule.

Traditionnellement, α_pap représente en fait le degré d'ouverture du papillon motorisé d'admission des gaz dans le moteur (aujourd'hui α_pap représente la pédale qui est directement représentative du couple moteur).

En phase de freinage, c'est-à-dire lorsqu'on appuie sur une pédale de frein du véhicule, on calcule en 3 une estimation du régime primaire souhaité R_cible pour la transmission automatique, à partir d'une pluralité de paramètres Pi.

Par « régime primaire souhaité », on entend le régime primaire qui, compte tenu de la situation du véhicule, offre le maximum d'agrément de conduite et de sécurité.

A titre d'exemple, les paramètres Pi peuvent être choisis dans le groupe comprenant :
- une information représentative du temps de freinage,
- la décélération du véhicule,
- le régime primaire,
- le régime primaire calculé sur les rapports inférieurs (valable uniquement dans le cas d'une transmission automatique à rapports discrets),
- la pente de la route,
- un indicateur représentatif du style de conduite,
- la masse du véhicule,
- l'adhérence,
- l'accélération transversale,
- la température de la boîte,
- la température de l'eau moteur.

On obtient ainsi à l'issue de l'étape 3 une estimation R_cible du régime primaire souhaité.

En 4, on déduit de la valeur R_cible ainsi déterminée une valeur R_rétro représentant :
- dans le cas d'une transmission à rapports discrets, le rapport de vitesses dont il faut se rapprocher,
- dans le cas d'une transmission à rapport continûment variable, le régime à atteindre,
pour obtenir la valeur R_cible souhaitée.

Le traitement des paramètres Pi en 3 pour estimer le régime primaire R_cible souhaité peut être effectué en logique classique ou en logique floue, ou peut faire intervenir tout autre moyen d'interprétation de la volonté du conducteur (réseaux de neurones etc.).

A titre d'exemple illustratif et non limitatif, voici quelques règles qui peuvent présider à l'estimation du régime primaire souhaité R_cible :
- plus le conducteur freine fort, plus on rétrograde à des régimes élevés,
- plus on se trouve en descente, plus on rétrograde tôt,
- plus le conducteur est sportif, plus on rétrograde à des régimes élevés,
- plus le véhicule est chargé en descente, plus on rétrograde tôt,
- si l'adhérence est faible et si on est en virage, on ne rétrograde pas,
- si on freine légèrement et si l'adhérence est faible, on rétrograde à des régimes faibles,
- si on freine fort et si l'adhérence est faible, on ne rétrograde pas.

En 5, on détermine une valeur R_consigne destinée à commander effectivement le changement de rapport (ou de régime) de la transmission automatique.

Hors phase de freinage, la valeur R_consigne est égale à la valeur R_demandé, et en phase de freinage, la valeur R_consigne est égale à la valeur R_rétro.

La gestion de la sortie des phases de freinage peut s'effectuer de la manière suivante.

Dans le cas d'une transmission automatique à rapports discrets, on initialise une temporisation dès que R_consigne impose une rétrogradation à la transmission automatique.

Cette temporisation est fonction de la vitesse du véhicule et du style de conduite.

Dès que le conducteur a renfoncé le pied sur l'accélérateur, la temporisation est lancée.

Si, pendant que la temporisation s'écoule, le conducteur relève le pied, alors la temporisation est figée et R_consigne est figée à sa dernière valeur.

Dès que la temporisation est écoulée et qu'on n'est pas en virage, R_consigne prend la valeur de R_demandé.

Si on est en virage, R_consigne est figée et on attend la sortie du virage pour lui donner la valeur de R_demandé.

Dans le cas d'une transmission à rapport continûment variable, dès que le conducteur a renfoncé le pied sur l'accélérateur, R_consigne rejoint R_demandé avec un filtre de type rampe ou du premier ordre, fonction de la vitesse du véhicule et du style de conduite.

Si pendant que le filtrage s'écoule, une des conditions définies par les règles susmentionnées redevient vraie, alors le filtrage est arrêté et R_consigne reprend la valeur R_rétro.

Si, pendant que le filtrage s'écoule, le conducteur lève le pied, alors le filtrage est arrêté et R_consigne est figée à sa dernière valeur.

On notera que dans le procédé qui vient d'être décrit et dans le cas d'une transmission automatique à rapports discrets, la valeur R_rétro peut dans certaines circonstances prendre des valeurs décroissantes très rapprochées dans le temps, ce qui pourrait provoquer une succession très rapide de rétrogradations.

Une telle situation n'est évidemment pas souhaitable, car elle altère sensiblement le confort de conduite.

Au contraire, il est préférable dans ce genre de situation de donner directement à la transmission automatique une consigne de rétrogradation double ou multiple.

Pour ce faire, on peut prévoir de lancer une temporisation dès que la valeur R_cible commande une première rétrogradation.

Pendant cette temporisation, aucune consigne finale de rapport R_rétro n'est donnée : R_rétro est maintenue à la valeur R_demandé déterminée par les lois 1, et on mémorise la valeur minimale prise par la valeur R_cible.

A la fin de la temporisation, on donne à R_rétro ladite valeur minimale mémorisée.

On peut de la sorte effectuer une seule rétrogradation double ou multiple plutôt qu'une série de rétrogradations successives très rapprochées.

La temporisation dépend du rapport actuel de la transmission automatique, des lois 1 et de la décélération du véhicule.

La valeur de cette temporisation est réactualisée en permanence pendant son écoulement : plus la décélération augmente, plus la demande de rétrogradation est pressante, et donc plus la temporisation sera courte.

A la fin de cette temporisation, lorsque la rétrogradation commence, on lance une autre temporisation pendant laquelle aucune nouvelle valeur R_rétro n'est calculée.

En effet, la rétrogradation en cours (simple au multiple) entraîne un surcroît de décélération du véhicule qui pourrait être interprétée à tort à l'étape 3 comme une nouvelle demande de freinage du conducteur.

Cette deuxième temporisation dépend du jeu de lois sélectionné, de la valeur R_rétro qui vient d'être lancée et de la décélération du véhicule au moment où cette valeur a été lancée.

Cette deuxième temporisation ne nécessite pas d'être réactualisée pendant son écoulement car elle dépend de paramètres qui ne varient pas pendant ce temps-là.

A la fin de cette deuxième temporisation, la valeur R_cible est de nouveau calculée et dès qu'une nouvelle demande de rétrogradation est détectée, on peut relancer le processus décrit plus haut.

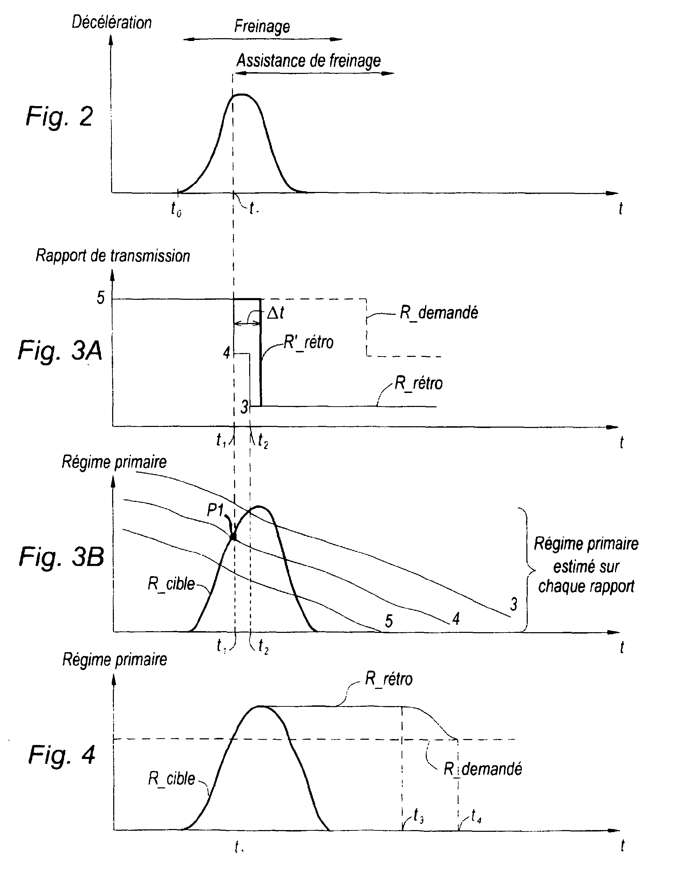

Pour illustrer le mode de fonctionnement du procédé selon l'invention, on peut se reporter aux figures 2 à 4.

Sur la figure 2, on a représenté la décélération au cours du temps d'un véhicule automobile équipé d'une transmission automatique mettant en oeuvre le procédé selon l'invention.

Comme on peut le voir sur cette figure, l'intensité de cette décélération croît à partir d'un instant t0 correspondant au début du freinage, atteint un maximum puis décroît.

L'« assistance au freinage», c'est-à-dire la mise en oeuvre du processus de rétrogradation, débute à un instant t1 postérieur à l'instant t0, et légèrement antérieur à l'instant où la décélération atteint son maximum.

On se reporte à présent aux figures 3A et 3B, qui concernent le cas d'une transmission automatique à rapports discrets.

On voit qu'avant l'instant t1, où l'on suppose que le véhicule roule en 5^{ème} vitesse, les valeurs R_demandé et R_rétro se confondent.

Comme on peut le voir sur la figure 3B, à cet instant t1, on se situe en un point P1 de la courbe d'estimation du régime primaire souhaité R_cible, établie à partir des calculs effectués à l'étape 3 (voir figure 1).

On voit sur la figure 3B que c'est le quatrième rapport de vitesses qui permettra d'approcher au mieux le régime primaire souhaité.

A partir de cette information, on sait qu'à l'instant t1, la valeur R_rétro doit être telle qu'elle impose une rétrogradation du cinquième au quatrième rapport de vitesses.

A l'instant t2 postérieur à l'instant t1, on observe sur la figure 3A une rétrogradation du quatrième au troisième rapport de vitesses imposée par la valeur R_rétro selon le même principe que celui qui vient d'être décrit pour la rétrogradation du cinquième au quatrième rapport de vitesses.

On peut observer sur la figure 3A que la valeur R_rétro a chu du cinquième au quatrième rapport beaucoup plus tôt que ne n'a fait la valeur R_demandé, ce qui illustre de manière très explicite l'intérêt de l'invention : la rétrogradation a lieu pendant la phase de freinage, et non pas après, ce qui permet de profiter pleinement du frein moteur et donc de réaliser un freinage beaucoup plus efficace.

On notera également sur la figure 3A qu'on a représenté une variante pour la valeur R_rétro, désignée par R'-rétro.

Dans le cas précédent R_rétro = R_cible et dans cette variante R_rétro reste identique et R'_rétro est R-cible.

Cette variante correspond au cas où on envisage une temporisation permettant de remplacer plusieurs rétrogradations successives rapprochées par une seule rétrogradation, conformément aux préceptes exposés plus haut.

On remarque qu'au lieu de prendre dès l'instant t1 une valeur correspondant au quatrième rapport, la valeur R'_rétro garde la valeur de R_demandé pendant une durée Δt > t2-t1.

A l'issue de cette durée Δt, la valeur R'_rétro passe directement d'une valeur correspondant au cinquième rapport à une valeur correspondant au troisième rapport, ce qui permet effectivement de remplacer dans le cas d'espèce une double rétrogradation par une rétrogradation simple.

On se reporte à présent à la figure 4 sur laquelle on a représenté le déroulement du procédé selon l'invention dans le cas d'une transmission automatique à rapport continûment variable.

Il est précisé ici que cette figure 4 doit être lue en parallèle de la figure 2, c'est-à-dire en faisant abstraction des figures 3A et 3B.

Comme cela apparaît sur cette figure, la valeur R_rétro est égale à la valeur R_cible tant que cette dernière augmente, puis la valeur R_rétro conserve la valeur maximale atteinte par R_cible, jusqu'à un instant t3 à partir duquel elle décroît pour finalement rejoindre la valeur R_demandé à un instant t4.

Comme on peut le comprendre à la lumière de ce qui précède, le procédé selon l'invention permet d'adapter le déroulement de la rétrogradation de la transmission automatique à un objectif de régime primaire qui, compte tenu de la situation du véhicule, semble offrir le maximum de confort de conduite et de sécurité.

De plus, le procédé selon l'invention peut être appliqué tant à une transmission automatique à rapports discrets qu'à une transmission automatique à rapport continûment variable.

En outre, le procédé selon l'invention permet de gérer de façon optimale les rétrogradations multiples dans le cas d'une transmission automatique à rapports discrets.

On notera par ailleurs que le procédé selon l'invention prend en compte l'environnement du véhicule (montée, plat, descente, virage ....), le style du conducteur, le chargement du véhicule, ainsi que l'adhérence du sol.

Bien entendu, la présente invention n'est pas limitée au mode de réalisation décrit et représenté, fourni à titre illustratif et non limitatif.

## Revendications

1. Procédé de commande d'une transmission automatique de véhicule automobile en phase de freinage, du type dans lequel :
- on détermine une valeur de rapport ou de régime de transmission demandé (R_demandé) à partir de lois préétablies (1),
- on détermine, à partir de cette valeur et de paramètres (Pi) représentatifs de la situation dudit véhicule, une valeur de rapport ou de régime de transmission corrigée (R_rétro) apte à provoquer une rétrogradation anticipée de ladite transmission automatique,
**caractérisé en ce qu'**on détermine ladite valeur corrigée (R_rétro) à partir d'une estimation du régime primaire souhaité (R_cible) pour ladite transmission automatique.

2. Procédé selon la revendication 1, **caractérisé en ce qu'**on réalise ladite estimation à partir de paramètres choisis dans le groupe comprenant :
- une information représentative du temps de freinage,
- la décélération du véhicule,
- le régime primaire,
- le régime primaire calculé sur les rapports inférieurs valable uniquement dans le cas d'une transmission automatique à rapports discrets,
- la pente de la route,
- un indicateur représentatif du style de conduite,
- la masse du véhicule,
- l'adhérence,
- l'accélération transversale,
- la température de la boîte,
- la température de l'eau moteur.

3. Procédé selon la revendication 2, **caractérisé en ce qu'**on réalise ladite estimation en appliquant des règles choisies dans le groupe comprenant les règles suivantes :
- plus le conducteur freine fort, plus on rétrograde à des régimes élevés,
- plus on se trouve en descente, plus on rétrograde tôt,
- plus le conducteur est sportif, plus on rétrograde à des régimes élevés,
- plus le véhicule est chargé en descente, plus on rétrograde tôt,
- si l'adhérence est faible et si on est en virage, on ne rétrograde pas,
- si on freine légèrement et si l'adhérence est faible, on rétrograde à des régimes faibles,
- si on freine fort et si l'adhérence est faible, on ne rétrograde pas.

4. Procédé selon la revendication 3, **caractérisé en ce qu'**on adapte les seuils desdites règles à la situation dudit véhicule.

5. Application d'un procédé conforme à l'une quelconque des revendications précédentes à une transmission à rapport continûment variable.

6. Application selon la revendication 5, **caractérisé en ce qu'**à l'issue de la phase de freinage, on applique la stratégie suivante :
- lorsqu'on appuie sur l'accélérateur, on fait converger la valeur de régime de consigne (R_consigne) appliquée à ladite transmission automatique vers ladite valeur de régime demandé par les lois (R_demandé),
- si, pendant ladite convergence, on se retrouve dans une situation où il convient de rétrograder, on redonne ladite valeur de régime corrigée (R_rétro) à ladite valeur de régime de consigne (R_consigne),
- si, pendant ladite convergence, on relève le pied de l'accélérateur, alors on fige ladite valeur de régime de consigne (R_consigne) à sa dernière valeur.

7. Application d'un procédé conforme à l'une quelconque des revendications 1 à 4 à une transmission à rapports discrets.

8. Application selon la revendication 7, **caractérisé en ce qu'**on attend que ladite valeur corrigée (R_rétro) ait subi une diminution correspondant au moins à une double rétrogradation pour autoriser effectivement cette double rétrogradation, dans la limite d'une temporisation maximum.

9. Application selon la revendication 8, **caractérisé en ce qu'**on adapte ladite attente à des paramètres choisis dans le groupe comprenant la valeur actuelle du rapport de transmission, le jeu de lois de changement de vitesses sélectionné et la décélération du véhicule.

10. Application selon l'une quelconque des revendications 7 à 9, **caractérisé en ce qu'**à l'issue de la phase de freinage, on applique la stratégie suivante :
- au début de la rétrogradation, on initialise une temporisation,
- lorsqu'on appuie sur l'accélérateur, on lance la temporisation,
- si, pendant que ladite temporisation s'écoule, on relève le pied de l'accélérateur, alors on fige la valeur de rapport de consigne (R_consigne) appliquée à ladite transmission automatique à sa dernière valeur,
- dès que la temporisation est écoulée et qu'on n'est pas en virage, on donne ladite valeur de rapport demandé (R_demandé) à ladite valeur de rapport de consigne (R_consigne),
- si on est en virage, la valeur de rapport de consigne (R_consigne) est figée jusqu'à la sortie du virage.

11. Transmission automatique de véhicule automobile, **caractérisée en ce qu'**elle est adaptée pour mettre en oeuvre un procédé conforme à l'une quelconque des revendications1 à 4.

12. Véhicule automobile, **caractérisé en ce qu'**il incorpore une transmission automatique conforme à l'une quelconque des revendications précédentes.

## Claims

1. Method of controlling an automatic transmission of a motor vehicle in the braking phase, of the type in which:
- a requested (R_requested) transmission ratio or speed is determined based on pre-established laws (1),
- based on this value and on parameters (P) representative of the situation of said vehicle, a corrected (R_retro) transmission ratio or speed value is determined that is able to provoke an early downshift of said automatic transmission,
**characterized in that** said corrected value (R_retro) is determined from an estimation of the desired primary speed (R_target) for said automatic transmission.

2. Method according to Claim 1, **characterized in that** said estimation is made on the basis of parameters selected from the group comprising:
- information representative of the braking time,
- the deceleration of the vehicle,
- the primary speed,
- the primary speed calculated on the lower ratios, valid only in the case of an automatic transmission with discrete gears,
- the gradient of the road,
- an indicator representative of the driving style,
- the weight of the vehicle,
- road grip,
- transversal acceleration,
- the temperature of the gearbox,
- the temperature of the engine coolant.

3. Method according to Claim 2, **characterized in that** said estimation is made by applying rules selected from the group comprising the following rules:
- the harder the driver brakes, the greater the downshift at high speeds,
- the steeper the descent, the earlier the downshift,
- the more sporty the driver, the greater the downshift at high speeds,
- the greater the load on the vehicle on a down slope, the earlier the downshift,
- if road grip is weak and if in a turn, there is no downshift,
- if braking gently and if road grip is weak, there is a downshift at low speeds,
- if braking hard and if road grip is weak, there is no downshift.

4. Method according to Claim 3, **characterized in that** the thresholds of said rules are adapted to the situation of said vehicle.

5. Application of a method conforming to any one of the preceding claims to a continuously variable gear transmission.

6. Application according to Claim 5, **characterized in that**, on completion of the braking phase, the following strategy is applied:
- when the accelerator is pressed, the setpoint speed value (R_setpoint) applied to said automatic transmission is made to converge towards said speed value requested by the laws (R_requested),
- if, during said convergence, there is a situation in which a downshift is required, said corrected speed value (R_retro) is given back to said setpoint speed value (R_setpoint),
- if, during said convergence, the foot is raised on the accelerator, then said setpoint speed value (R_setpoint) is frozen at its latest value.

7. Application of a method conforming to any one of Claims 1 to 4 to a discrete gear transmission.

8. Application according to Claim 7, **characterized in that** there is a wait for said corrected value (R_retro) to have undergone a reduction corresponding to at least a double downshift in order to effectively authorize this double downshift, within the limit of a maximum time delay.

9. Application according to Claim 8, **characterized in that** said wait is adapted to parameters selected from the group comprising the actual value of the transmission ratio, the selected set of speed changing laws and the deceleration of the vehicle.

10. Application according to any one of Claims 7 to 9, **characterized in that**, on completion of the braking phase, the following strategy is applied:
- at the start of the downshift, a time delay is initialized,
- when the accelerator is pressed, the time delay is started,
- if, during said time delay, the foot is raised on the accelerator, then the setpoint ratio value (R_setpoint) applied to said automatic transmission is frozen at its latest value,
- immediately the time delay has elapsed and the vehicle is not turning, said requested ratio value (R_requested) is given to said setpoint ratio value (R_setpoint),
- if the vehicle is turning, the setpoint ratio value (R_setpoint) is frozen until the exit from the turn.

11. Automatic motor vehicle transmission, **characterized in that** it is adapted to implement a method conforming to any one of Claims 1 to 4.

12. Motor vehicle, **characterized in that** it incorporates an automatic transmission conforming to any one of the preceding claims.

## Patentansprüche

1. Verfahren zur Steuerung eines Automatikgetriebes eines Kraftfahrzeugs in der Bremsphase, von der Art, bei der:
- ein Wert einer geforderten Übersetzung oder Drehzahl (R_demandé) ausgehend von vorab erstellten Gesetzen bestimmt wird (1),
- ausgehend von diesem Wert und von für die Situation des Fahrzeugs repräsentativen Parametern (Pi) ein korrigierter Übersetzungs-oder Drehzahlwert (R_rétro) bestimmt wird, der eine vorzeitige Rückschaltung des Automatikgetriebes bewirken kann,
**dadurch gekennzeichnet, dass** der korrigierte Wert (R_rétro) ausgehend von einer Schätzung der gewünschten Primärdrehzahl (R_cible) für das Automatikgetriebe bestimmt wird.

2. Verfahren nach Anspruch 1, **dadurch gekennzeichnet, dass** die Schätzung ausgehend von Parametern durchgeführt wird, die aus der Gruppe ausgewählt werden, die enthält:
- eine für die Bremszeit repräsentative Information,
- die Verzögerung des Fahrzeugs,
- die Primärdrehzahl,
- die Primärdrehzahl, berechnet auf die unteren Übersetzungen, nur im Fall eines Automatikgetriebes mit getrennten Übersetzungen gültig,
- das Gefälle der Straße,
- eine für den Fahrstil repräsentative Anzeige,
- die Masse des Fahrzeugs,
- der Kraftschluss,
- die Querbeschleunigung,
- die Temperatur des Getriebes,
- die Temperatur des Motorwassers.

3. Verfahren nach Anspruch 2, **dadurch gekennzeichnet, dass** die Schätzung durchgeführt wird, indem Regeln angewendet werden, die aus der Gruppe ausgewählt werden, die die folgenden Regeln enthält:
- je stärker der Fahrer bremst, desto stärker wird bei hohen Drehzahlen zurückgeschaltet,
- je stärker das Gefälle, desto früher wird zurückgeschaltet,
- je sportlicher der Fahrer fährt, desto stärker wird bei hohen Drehzahlen zurückgeschaltet,
- je stärker das Fahrzeug in einem Gefälle beladen ist, desto früher wird zurückgeschaltet,
- wenn der Kraftschluss schwach ist, und in einer Kurve, wird nicht zurückgeschaltet,
- wenn leicht gebremst wird und der Kraftschluss schwach ist, wird bei niedrigen Drehzahlen zurückgeschaltet,
- wenn stark gebremst wird und der Kraftschluss schwach ist, wird nicht zurückgeschaltet.

4. Verfahren nach Anspruch 3, **dadurch gekennzeichnet, dass** die Schwellwerte der Regeln an die Situation des Fahrzeugs angepasst werden.

5. Anwendung eines Verfahrens nach einem der vorhergehenden Ansprüche auf ein stufenlos variables Getriebe.

6. Anwendung nach Anspruch 5, **dadurch gekennzeichnet, dass** nach der Bremsphase die folgende Strategie angewendet wird:
- wenn auf das Gaspedal getreten wird, lässt man den Solldrehzahlwert (R_consigne), der an das Automatikgetriebe angewendet wird, zum von den Gesetzen geforderten Drehzahlwert konvergieren (R_demandé),
- wenn während des Konvergierens wieder eine Situation auftritt, in der zurückgeschaltet werden sollte, wird der korrigierte Drehzahlwert (R_rétro) dem Solldrehzahlwert (R_consigne) zurückgegeben,
- wenn während des Konvergierens der Fuß vom Gaspedal genommen wird, wird der Solldrehzahlwert (R_consigne) auf seinem letzten Wert eingefroren.

7. Anwendung eines Verfahrens nach einem der Ansprüche 1 bis 4 auf ein Getriebe mit getrennten Übersetzungen.

8. Anwendung nach Anspruch 7, **dadurch gekennzeichnet, dass** abgewartet wird, dass der korrigierte Wert (R_rétro) eine Verringerung erfahren hat, die mindestens einem doppelten Zurückschalten entspricht, um tatsächlich dieses doppelte Zurückschalten in den Grenzen einer maximalen Verzögerung zu erlauben.

9. Anwendung nach Anspruch 8, **dadurch gekennzeichnet, dass** das Abwarten an Parameter angepasst wird, die aus der Gruppe ausgewählt werden, die den aktuellen Wert der Übersetzung, den ausgewählten Satz von Schaltgesetzen und die Verzögerung des Fahrzeugs enthält.

10. Anwendung nach einem der Ansprüche 7 bis 9, **dadurch gekennzeichnet, dass** am Ende der Bremsphase die folgende Strategie angewendet wird:
- zu Beginn des Zurückschaltens wird eine Verzögerung initialisiert,
- beim Treten auf das Gaspedal wird die Verzögerung gestartet,
- wenn während des Ablaufs der Verzögerung der Fuß vom Gaspedal genommen wird, wird der auf das Automatikgetriebe angewendete Sollübersetzungswert (R_consigne) auf seinem letzten Wert eingefroren,
- sobald die Verzögerung abgelaufen ist und man sich nicht in einer Kurve befindet, wird der geforderte Übersetzungswert (R_demandé) dem Sollübersetzungswert (R_consigne) verliehen,
- in einer Kurve wird der Sollübersetzungswert (R_consigne) bis zum Ende der Kurve eingefroren.

11. Automatikgetriebe eines Kraftfahrzeugs, **dadurch gekennzeichnet, dass** es geeignet ist, um ein Verfahren nach einem der Ansprüche 1 bis 4 durchzuführen.

12. Kraftfahrzeug, **dadurch gekennzeichnet, dass** es ein Automatikgetriebe nach einem der vorhergehenden Ansprüche aufweist.
